# EUROPEAN PATENT SPECIFICATION

(11) **EP 4 187 015 B1**
(45) Date of publication and mention of the grant of the patent: **11.09.2024**
(21) Application number: 22209794.1
(22) Date of filing: 28.11.2022
(51) Int. Cl.: D21H 17/28, D21H 17/66, D21H 17/00, D21J 3/00

(54) **METHOD FOR PRODUCING SHAPED ARTICLE AND BINDER**
VERFAHREN ZUR HERSTELLUNG EINES FORMKÖRPERS UND BINDEMITTEL
PROCÉDÉ DE PRODUCTION D'UN ARTICLE FAÇONNÉ ET LIANT

(30) Priority: 29.11.2021 JP 2021192659
(43) Date of publication of application: 31.05.2023
(73) Proprietor: Seiko Epson Corporation, Tokyo 160-8801 (JP)
(72) Inventor: WAKABAYASHI, Shigemi, Suwa-shi, 392-8502 (JP)
(74) Representative: Lewis Silkin LLP

(56) References cited:
- EP-A2- 3 913 017
- US-A1- 2021 301 106

## Description

The present application is based on, and claims priority from JP Application Serial Number 2021-192659, filed November 29, 2021.

### BACKGROUND

### 1. Technical Field

The present disclosure relates to a method for producing a shaped article and to a binder.

### 2. Related Art

In the related art, methods are known in which a sheet-shaped article containing fibers and a macromolecular polysaccharide, such as starch, as a binder for the fibers is produced. For example, JP-A-2004-115960 discloses a starch-based paper-strengthening agent whose main constituent is a starch having a relatively small average degree of polymerization.

The starch-based paper-strengthening agent described in JP-A-2004-115960, however, has a disadvantage: with this agent, it is difficult to improve the strength of a shaped article in dry shaping as well, or in shaping with a small amount of water. This is because, with a small amount of water, fiber fibrils cannot contribute to interfiber bonding, and paper strength enhancers based on a low-molecular-weight starch like that described in JP-A-2004-115960 fail to compensate for the associated lack of interfiber bonding strength. Obtaining a sufficiently strong shaped article with a small amount of water as in the method according to an aspect of the present disclosure for producing a shaped article, therefore, requires using a starch-based paper strength enhancer having an appropriate molecular weight. Obtaining such a starch-based paper strength enhancer requires properly controlling the molecular weight of the starch, and an effective way of doing that is to treat the starch, for example by hydrolysis with an acid or other substances. Molecular-weight control by acid treatment, however, has had a disadvantage as described below.

More precisely, acid treatment of starch can involve neutralizing the acid by adding a material like a hydroxide of an alkali metal. Any residual fraction of the alkali metal salt produced via the neutralization in the starch often causes the gelatinization temperature to fluctuate, and this has made gelatinization temperature control a difficult task. Since the gelatinization temperature of starch is relevant to the strength of a shaped article made therewith, the gelatinization temperature variability has been an obstacle to improving the strength of shaped articles. Overall, there is a need for a method, for producing a shaped article, that improves the strength of the shaped article compared with known methods.

### SUMMARY

According to an aspect of the present disclosure, a method for producing a shaped article as set out in the appended set of claims.

### BRIEF DESCRIPTION OF THE DRAWINGS

FIG. 1 is a schematic view illustrating the structure of a complex used in a method according to an embodiment for producing a shaped article.
FIG. 2 is a flowchart illustrating the method for producing a shaped article.
FIG. 3 is a schematic view illustrating the structure of a production system used in the method for producing a shaped article.

### DESCRIPTION OF EXEMPLARY EMBODIMENTS

The embodiments described below provide examples of a binder for dry shaping, a method for producing a sheet-shaped article using this binder, etc., and describe them with reference to drawings. For the sake of convenience, the elements in the drawings are not drawn to scale. The term "dry shaping" herein refers to a shaping process in which a relatively small amount of water is used compared with wet shaping, such as wet sheet-making. The amount of water supplied will be described later herein.

### 1. Complex

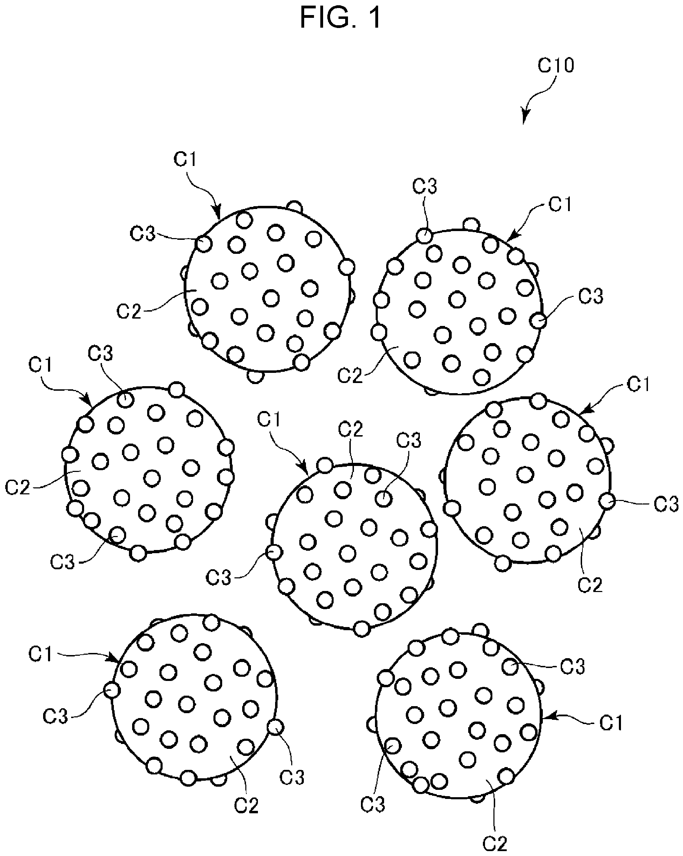

As illustrated in FIG. 1, a complex C10 according to this embodiment includes composite particles C1 formed by binding material particles C2, which are particles of a binding material containing starch, and inorganic oxide particles C3 integrated therewith. The complex C10 is an example of a binder according to an aspect of the present disclosure for dry shaping. The complex C10 will act as a binder for fibers in the production of a shaped article containing the fibers.

In this context, inorganic oxide particles C3 being integrated with binding material particles C2 refers to a situation in which at least a subset of the inorganic oxide particles C3 are on the surface of or inside the binding material particles C2. Besides the composite particles C1, the complex C10 may include binding material particles C2 and inorganic oxide particles C3 as separate particles not forming composite particles C1.

In particular, composite particles C1 having inorganic oxide particles C3 on the surface of the binding material particle C2 undergo a repulsive force that acts between the inorganic oxide particles C3.

By virtue of these, the binding material particles C2 do not easily aggregate together. The unevenness in the distribution of the binding material particles C2 in the shaped article will be limited, improving the strength of the shaped article. The state of the inorganic oxide particles C3 on the binding material particles C2 can be observed using, for example, a scanning electron microscope.

### 1.1. Composite Particles

The composite particles C1 have one or more inorganic oxide particles C3 on the surface of each one of the binding material particles C2. Preferably, multiple inorganic oxide particles C3 are adhering to the surface of each one of the binding material particles C2. This enhances the preventive effect on the aggregation of the binding material particles C2.

Preferably, the average particle diameter of the composite particles C1 is 1.0 µm or more and 100.0 µm or less, more preferably 2.0 µm or more and 70.0 µm or less, even more preferably 3.0 µm or more and 50.0 µm or less. This further enhances the above effect.

An average particle diameter herein refers to a diameter at a 50% volume in a particle size distribution by volume. The average particle diameter is measured by the dynamic light scattering and laser diffraction methods set forth in JIS Z8825. Specifically, commercially available dynamic light scattering-based particle size analyzers, such as Nikkiso's Microtrac UPA, can be employed. The average particle diameter of the starch is measured using such an analyzer after the starch is dispersed in water or any other solvent.

Preferably, the composite particles C1 content of the complex C10 is 50% by mass or more, more preferably 70% by mass or more, even more preferably 80% by mass or more of the total mass of the complex C10. This reduces unevenness in the distribution of the composite particles C1.

### 1.1.1. Binding Material Particles

The binding material particles C2 will experience the gelatinization of the starch in the binding material therein when heated after being supplied with water. By gelatinizing, the starch will join fibers together in the mixture described below, a material for the shaped article.

The starch will form noncovalent bonds, such as hydrogen bonds, with the fibers, cellulose fibers in particular, which have hydroxyl and other functional groups. The starch, therefore, will cover the fibers well, improving the strength of the shaped article.

Starch is a polymeric compound formed by multiple α-glucose molecules polymerized by glycosidic bonds. Starch contains at least one of amylose or amylopectin.

The starch can be of any origin, but examples of origins include cereals, such as corn, wheat, and rice; beans, such as peas, broad beans, green gram, and *adzuki* beans (*Vigna angularis*); tubers, such as potatoes, sweet potatoes, and tapioca; wild grasses, such as *katakuri* (*Erythronium japonicum*)*,* bracken, and *kudzu* vine (*Pueraria montana* var. *lobata*); and palm trees, such as the sago palm. Being of natural origin, starches are effective reducers of carbon dioxide emissions compared with petroleum derivatives and are highly biodegradable at the same time.

The starch may be a modified or altered starch. Examples of modified starches include acetylated distarch adipate, acetylated starch, oxidized starch, starch sodium octenyl succinate, hydroxypropyl starch, hydroxypropyl distarch phosphate, monostarch phosphate, phosphated distarch phosphate, urea phosphate starch, sodium starch glycolate, and high-amylose corn starch.

Examples of altered starches include pregelatinized starch, dextrin, lauryl polyglucose, cationic starches, thermoplastic starches, and starch carbamate. Dextrin is preferably one obtained by modifying or altering starch.

Preferably, the gelatinization temperature of the starch is 30°C or above and 60°C or below, more preferably 35°C or above and 55°C or below, even more preferably 40°C or above and 52°C or below. This ensures the starch will easily gelatinize with a relatively small amount of water even when the heating temperature is relatively low. The starch in that case, therefore, is suitable for producing a shaped article by dry shaping and helps further improve the strength of the shaped article in dry shaping. How to measure the gelatinization temperature of the starch will be described later.

The gelatinization temperature of starch correlates with the chain length, or the average molecular weight, of the starch. When the gelatinization temperature of the starch exceeds 60°C, therefore, it is preferred to adjust the gelatinization temperature by cutting the polymer chains into lower-molecular-weight segments. The cutting of polymer chains of starch is done by, for example, acid treatment, enzymatic treatment, treatment with an oxidant, or physical treatment. Acid treatment is particularly preferred for its simplicity and ease of implementation. In other words, it is preferred that the starch be an acid-treated starch, hydrolyzed by acid treatment and having an adjusted average molecular weight.

Preferably, the average molecular weight of the starch is, for example, 50000 or more and 400000 or less as a weight-average molecular weight. This improves the water absorption of the binding material particles C2, thereby helping reduce the amount of water supplied in the production of the shaped article. The weight-average molecular weight of starch can be determined by GPC (gel permeation chromatography).

A starch treated with an acid can contain a salt, such as an alkali metal salt. In that case, the binding material contains starch and an alkali metal salt. More precisely, acid treatment uses an acid, such as hydrochloric acid or sulfuric acid. After the adjustment of the average molecular weight with the acid, the acid is neutralized with an aqueous solution, for example of sodium hydroxide or potassium hydroxide. During this, the acid for acid treatment and the base for neutralization combine to produce an alkali metal salt, such as sodium chloride, potassium chloride, or sodium sulfate.

The alkali metal salt produced through the acid treatment is eliminated through washing subsequent to the neutralization. In the related art, however, it has leaved so much salt that the gelatinization temperature of the starch will fluctuate. More precisely, the gelatinization temperature of starch is measured by differential scanning calorimetry (DSC). When a sample of a starch relatively rich in an alkali metal salt is analyzed by DSC, the resulting DSC curve, which is an indicator for the gelatinization temperature, tends to be distorted or split. This has made it difficult to pinpoint the exact gelatinization temperature, thereby making gelatinization temperature control a difficult task. During the process of producing a shaped article, furthermore, the alkali metal salt has destabilized gelatinization behavior of binding material particles C2, causing reduced strength of the shaped article.

To address this, the alkali metal salt content of the binding material is reduced to 2.0% by mass or less of the total mass of the starch, for example through additional washing. Preferably, this percentage is 1.5% by mass or less, more preferably 1.0% by mass or less, of the total mass of the starch. This makes the DSC endothermic peak as an indicator of the gelatinization temperature of the starch stable and clear, thereby allowing the manufacturer to control the gelatinization temperature. The reduction of the alkali metal salt content of the starch can be achieved by known washing methods, such as filtration after washing with water and ultrafiltration.

The average particle diameter of the binding material particles C2 is 1.0 µm or more and 30.0 µm or less, more preferably 3.0 µm or more and 20.0 µm or less, even more preferably 5.0 µm or more and 15.0 µm or less.

This makes more certain that the binding material particles C2 will perform their function as a binding material, and at the same time reduces unevenness in the distribution of the starch and the fibers by making the particles C2 more dispersible in the shaped article. The strength of the shaped article, therefore, will be further improved. Since the average particle diameter is 30.0 µm or less, furthermore, the total surface area per unit mass of the binding material particles C2 is increased. This enhances the water absorption of the binding material particles C2. The amount of water supplied in the production the shaped article will be reduced, and this helps make the production method suitable for dry shaping. The complex C10, furthermore, becomes easier to handle, and flowability is also improved, for example when the complex C10 is transported through piping.

The binding material particles C2 may contain binding materials other than starch. Examples of binding materials other than starch include glycogen, hyaluronic acid, and konjac; tamarind gum ethers, locust bean gum ethers, guar gum ethers, and acacia gum arabic, which are natural gum adhesives; carboxymethylcellulose ethers and hydroxyethylcellulose, which are fiber-derived adhesives; sodium alginate and agar, which are seaweeds; collagen, gelatin, and hydrolyzed collagen, which are proteins of animal origin; sericin and other compounds of natural origin; and polyvinyl alcohol, polyacrylic acid, and polyacrylamide.

Besides the binding material(s) such as starch, the binding material particles C2 may contain constituents that do not have the function of joining fibers together even when supplied with water. Examples of such constituents include coloring materials, such as pigments, dyes, and toner, and fiber materials.

Preferably, the starch content of the binding material particles C2 is 80% by mass or more, more preferably 90% by mass or more, even more preferably 95% by mass or more of the total mass of the binding material particles C2.

The complex C10 may contain binding material particles C2 with no inorganic oxide particle C3 adhering thereto, or, in other words, binding material particles C2 not forming composite particles C1. It is, however, preferred that the percentage of binding material particles C2 forming composite particles C1 be 50% by mass or more, more preferably 60% by mass or more, even more preferably 70% by mass or more of the total mass of binding material particles C2 in the complex C10.

### 1.1.2. Inorganic Oxide Particles

The inorganic oxide particles C3 prevent the aggregation of the composite particles C1 by being present on the surface of the binding material particles C2. Preferably, the average particle diameter of the inorganic oxide particles C3 is 1 nm or more and 20 nm or less, more preferably 5 nm or more and 18 nm or less.

This further reduces the aggregation of the composite particles C1 and, at the same time, improves their flowability by ensuring their surface roughness will not be too large. The inorganic oxide particles C3 in that case, furthermore, easily adhere to the surface of the binding material particles C2 and do not easily detach from the surface of the binding material particles C2.

The complex C10 may contain inorganic oxide particles C3 not adhering to binding material particles C2, or, in other words, inorganic oxide particles C3 not forming composite particles C1. It is, however, preferred that the percentage of inorganic oxide particles C3 forming composite particles C1 be 50% by mass or more, more preferably 60% by mass or more, even more preferably 70% by mass or more of the total mass of inorganic oxide particles C3 in the complex C10.

The base particle of the inorganic oxide particles C3 contains an inorganic oxide. Owing to the presence of the inorganic oxide in their base particle, the inorganic oxide particles C3 have improved heat resistance.

Examples of materials for the base particle of the inorganic oxide particles C3 include metal oxides, such as silica, alumina, titania, zirconia, magnetite, and ferrite; and glass materials, such as soda-lime glass, glass-ceramics, quartz glass, lead glass, potassium glass, borosilicate glass, and alkali-free glass. Of these materials, silica is particularly preferred; it improves the adhesion between the base particle and a coating layer derived from surface treatment agent(s). Silica, furthermore, is suitable for the production of sheet-shaped articles by virtue of its limited impact on the color of shaped articles made therewith.

The base particle of the inorganic oxide particles C3 may contain organic substances and/or inorganic substances other than inorganic oxides, such as metal nitrides, metal sulfides, and metal carbides. Preferably, the inorganic oxide content is 90% by mass or more, more preferably 92% by mass or more, even more preferably 95% by mass or more of the total mass of the base particle of the inorganic oxide particles C3.

Preferably, the inorganic oxide particles C3 have a coating layer produced by surface treatment on the surface of their base particle. Preferably, the coating layer is formed using a surface treatment agent, such as a fluorine-containing compound or silicon-containing compound. This further prevents the aggregation of the binding material particles C2 and that of the composite particles C1. The flowability and the ease of handling of the complex C10, furthermore, are improved, and this will improve productivity in the production of the shaped article. Such a coating layer, furthermore, efficiently reduces the surface free energy of the inorganic oxide particles C3, thereby improving the wettability of the complex C10 on the fibers.

Examples of fluorine compounds as surface treatment agents include perfluoropolyether and fluorinated silicone oil.

Examples of silicon-containing compounds as surface treatment agents include silicone compounds, such as trimethylsilyl-terminated polydimethylsiloxane, hydroxy-terminated polydimethylsiloxane, polymethylphenylsiloxane, amino-modified silicone oil, epoxy-modified silicone oil, carboxy-modified silicone oil, carbinol-modified silicone oil, polyether-modified silicone oil, and alkyl-modified silicone oil.

Of these various silicones, it is particularly preferred to use trimethylsilyl-terminated polydimethylsiloxane. In other words, it is preferred that the coating layer on the base particle of the inorganic oxide particles C3 have trimethylsilyl groups on its surface. This further prevents the aggregation of the inorganic oxide particles C3, that of the binding material particles C2, and that of the composite particles C1.

Preferably, the coating layer of the inorganic oxide particles C3 contains 2.0% by mass or more carbon in relation to the total mass of the inorganic oxide particles C3. This reduces the number of hydroxyl groups on the surface of the inorganic oxide particles C3, thereby lowering the hydrophilicity of the surface. As a result, for example, water absorption in the inorganic oxide particles C3, for example while in storage, will be reduced.

One such surface treatment agent alone or a combination of multiple ones may be used. When multiple surface treatment agents are used, each single base particle may be treated with the multiple ones. Alternatively, each single base particle may be treated with one of the surface treatment agents so that there will be a mixture of inorganic oxide particles C3 treated with different agents.

Preferably, the complex C10 meets the following conditions besides the foregoing.

It is preferred that the binding material particles C2 content of the complex C10 be 90.0% by mass or more and 99.9% by mass or less, more preferably 95.0% by mass or more and 99.7% by mass or less, even more preferably 97.0% by mass or more and 99.4% by mass or less of the total mass of the complex C10. This further improves the strength of the shaped article.

It is preferred that the inorganic oxide particles C3 content of the complex C10 be 0.1% by mass or more and 10.0% by mass or less, more preferably 0.3% by mass or more and 5.0% by mass or less, even more preferably 0.6% by mass or more and 3.0% by mass or less of the total mass of the complex C10. This further prevents the aggregation of the composite particles C1.

### 2. Method for Producing a Shaped Article

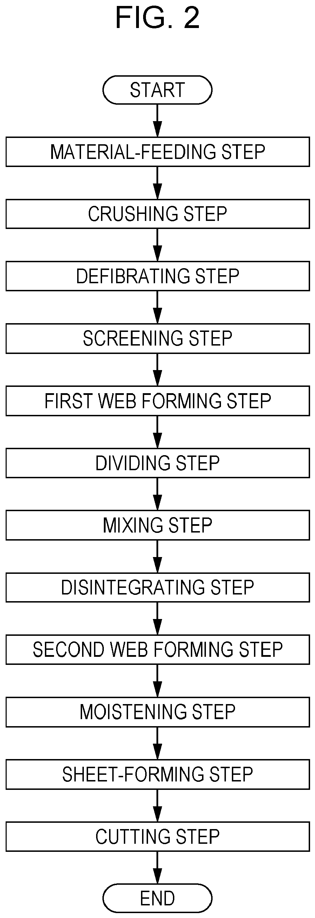

As illustrated in FIG. 2, a method according to this embodiment for producing a shaped article includes a material-feeding step; a crushing step; a defibrating step; a screening step; a first web forming step; a dividing step; a mixing step; a disintegrating step; a second web forming step, which is the deposition step; a moistening step; a sheet-forming step, which is the shaping step; and a cutting step.

In the method for producing a shaped article, a sheet-shaped article is produced through these steps in the indicated order, from the upstream material-feeding step to the downstream cutting step. It should be noted that the method according to an aspect of the present disclosure for producing a shaped article includes a deposition step, a moistening step, and a shaping step, and no other step needs to be as listed above. Of the steps in the method according to this embodiment for producing a shaped article, the second web forming, moistening, and sheet-forming steps will now be outlined first.

In the second web forming step, a mixture containing a complex C10 and fibers is deposited in the air, the complex C10 containing a binding material. That is, the method according to an aspect of the present disclosure for producing a shaped article is one that relates to dry shaping.

Preferably, the complex C10 content of the mixture is, for example, 1% by mass or more and 50% by mass or less, more preferably 2% by mass or more and 45% by mass or less, even more preferably 3% by mass or more and 40% by mass or less of the total mass of the mixture.

This ensures the fiber content of the shaped article will be maintained relatively high and helps improve the strength of the shaped article at the same time. In the production process for the shaped article, furthermore, the transportability of the mixture is improved.

The fibers in the mixture may be supplied with water beforehand, for example before the moistening step described below. In that case, it is preferred that the water content of the fibers supplied with water beforehand be 0.1% by mass or more and 12.0% by mass or less, more preferably 0.2% by mass or more and 10.0% by mass or less, even more preferably 0.3% by mass or more and 9.0% by mass or less of the total mass of the fibers.

This helps prevent the fibers from being affected by static electricity upstream of the second web forming step. More precisely, electrostatic adhesion of the fibers, for example to walls of the production system for the shaped article, is reduced. In the preparation of the mixture, furthermore, the fibers and the complex C10 are mixed together with reduced unevenness in distribution. Alternatively, the fibers may be supplied with water between the preparation of the mixture and the sheet-forming step.

The fibers are the main constituent of the shaped article produced by the method for producing a shaped article. The fibers contribute greatly to the shaped article's ability to hold its shape and have great impact on the strength and other characteristics of the shaped article at the same time.

Preferably, the fibers contain a material having one or more kinds of the following functional groups: hydroxyl, carbonyl, and amino. This encourages the formation of hydrogen bonds between the fibers and the starch in the complex C10. The strength of bonding between the fibers and the starch, therefore, is improved, and the strength of the shaped article will be further improved. Preferably, the fibers are able to maintain their shape as fibers by being heated in the sheet-forming step.

The fibers may be synthetic fibers, i.e., fibers containing a synthetic resin, such as polypropylene, polyester, or polyurethane. It is, however, preferred that the fibers be of natural origin, or of biomass origin, for example for environmental and resource preservation reasons.

Of fibers of biomass origin, it is more preferred that the fibers be of cellulose in particular. The cellulose fiber is of plant origin and is a relatively abundant natural material. By using cellulose fibers, therefore, the manufacturer can accelerate its efforts to handle environmental issues, preserve underground resources, etc. The cellulose fiber, furthermore, is superior in raw material availability and cost. The cellulose fiber, moreover, contributes to improving the strength of the shaped article, too, with its particularly high theoretical strength surpassing that of other fibers.

The cellulose fibers, although primarily cellulose, may contain constituents other than cellulose. Examples of constituents other than cellulose include hemicellulose and lignin. The cellulose fibers may have been treated, for example by bleaching.

The fibers may have been treated, for example by ultraviolet irradiation, ozonation, or plasma treatment. These treatments produce functional groups, such as hydroxyl groups, on the surface of the fibers. The hydrophilicity of the fibers, therefore, is increased, and the fibers become more compatible with the starch.

Preferably, the average length of the fibers is, for example, 0.1 mm or more and 50.0 mm or less, more preferably 0.2 mm or more and 5.0 mm or less, even more preferably 0.3 mm or more and 3.0 mm or less. This improves, for instance, stability in the shape of the shaped article.

Preferably, the average thickness of the fibers is, for example, 0.005 mm or more and 0.500 mm or less, more preferably 0.010 mm or more and 0.050 mm or less. This improves, for instance, stability in the shape of the shaped article. The smoothness of the surface of the shaped article is also improved.

Preferably, the average aspect ratio, i.e., the ratio of the average length to the average thickness, of the fibers is, for example, 10 or higher and 1000 or lower, more preferably 15 or higher and 500 or lower. This improves, for instance, stability in the shape of the shaped article. The smoothness of the surface of the shaped article is also improved.

In the moistening step, the mixture is supplied with water. The water supplied to the mixture will be used by the starch to gelatinize. Supplying water and applying heat in the subsequent sheet-forming step will cause the starch to gelatinize and join the fibers together.

Examples of how to supply water to the mixture include exposing the mixture to a high-humidity atmosphere and exposing the mixture to a mist containing water. In the moistening step, one such method alone or a combination of multiple ones is used. More precisely, water is supplied using, for example, a humidifier, such as a steam vaporizer or ultrasonic humidifier.

The amount of water supplied to the mixture in the moistening step is 12% by mass or more and 40% by mass or less, more preferably 15% by mass or more and 35% by mass or less, even more preferably 20% by mass or more and 30% by mass or less of the total mass of the mixture.

As stated above, the gelatinization temperature of the starch is controlled by virtue of a reduced alkali metal salt content, and this accelerates the gelatinization of the starch. Even though the above ranges of amounts of water supplied are significantly small compared with those in known wet sheet-making processes, therefore, it is easy to gelatinize the starch. This helps make the production method suitable for dry shaping.

Water may also be supplied to the mixture in step(s) other than the moistening step. The water supplied to the mixture may contain constituents other than water, such as a preservative, an antimold, and/or a pesticide.

The sheet-forming step includes a heating step and a pressing step. In the sheet-forming step, heat and pressure are applied to the mixture supplied with water to give a shaped article. The heat applied to the mixture accelerates the gelatinization of the starch in the mixture, and the gelatinized starch joins the fibers in the mixture together. Pressure is applied to the mixture, or the mixture is pressed, at the same time to turn the shaped article into the desired shape, for example the shape of a sheet. The above moistening step and the sheet-forming step may be performed in parallel. In the sheet-forming step, furthermore, the heating and pressing steps may be carried out separately.

Preferably, the heating temperature, to which the mixture is heated in the sheet-forming step, is 60°C or above and 200°C or below, more preferably 70°C or above and 150°C or below, even more preferably 80°C or above and 130°C or below. This prevents the fibers and the complex C10 in the mixture from being degraded, altered, or otherwise affected by excessive heating. The flowability of the complex C10, furthermore, is increased, and the complex C10 wets and spreads better over the fibers. As a result, the quality of the shaped article will be improved. The increased gelatinizability of the starch, furthermore, allows for a low heating temperature, which is also advantageous as it helps reduce the energy requirements for the heating.

Preferably, the pressure applied to the mixture in the sheet-forming step is 0.2 MPa or more and 10.0 MPa or less, more preferably 0.2 MPa or more and 10.0 MPa or less, even more preferably 0.3 MPa or more and 5.0 MPa or less. This limits damage to and breakage of the fibers in the mixture, thereby helping further improve the strength of the shaped article.

A specific example of a method for producing a shaped article will now be described together with a production system for the shaped article. It should be noted that the production system for a shaped article described below is merely an example; the system does not need to be as described below.

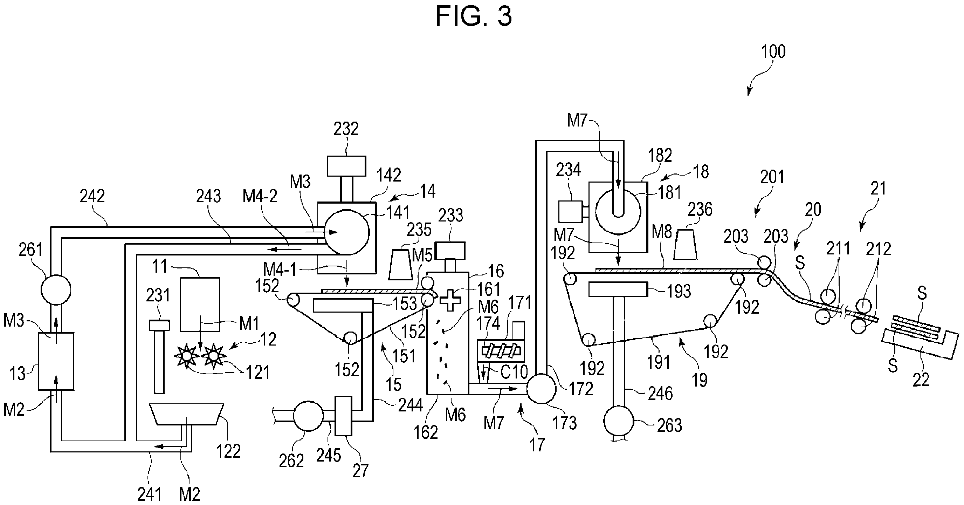

As illustrated in FIG. 3, the sheet-making system 100, which produces a sheet-shaped article, includes a material-feeding section 11, a crushing section 12, a defibrating section 13, a screening section 14, a first web forming section 15, a shredding section 16, a mixing section 17, a disintegrating section 18, a second web forming section 19, a sheet-forming section 20, a cutting section 21, and a stock section 22. In the following, the terms above and below, up and down, side by side, etc., are based on directions in FIG. 3. Being on the right in FIG. 3 may be described with the term downstream.

The sheet-making system 100 also includes moistening units 231, 232, 233, and 234. The sheet-making system 100, furthermore, includes a control unit, not illustrated. The control unit centrally controls each component of the sheet-making system 100.

At the material-feeding section 11, the material-feeding step is performed. The material-feeding section 11 feeds a sheet-shaped material M1 to the crushing section 12. The sheet-shaped material M1 is, for example, ordinary paper containing cellulose or other fibers.

At the crushing section 12, the crushing step is performed. The crushing section 12 crushes the sheet-shaped material M1 fed from the material-feeding section 11 in a gas, for example in the air. The crushing section 12 has a pair of crushing blades 121 and a hopper 122.

The pair of crushing blades 121 rotate in opposite directions and crush the sheet-shaped material M1 while it passes between the pair of crushing blades 121. By the pair of crushing blades 121, the sheet-shaped material M1 is broken into fragments M2. Preferably, the shape of the fragments M2 is one suitable for the defibration at the defibrating section 13, such as small pieces measuring 10 mm or more and 70 mm or less in length.

The hopper 122 is below the pair of crushing blades 121. The hopper 122 is substantially funnel-shaped, tapered at its bottom. This allows the hopper 122 to receive and collect the fragments M2 produced by the pair of crushing blades 121 and falling down.

Above the hopper 122 is a moistening unit 231 placed side-by-side with the pair of crushing blades 121. The moistening unit 231 moistens the fragments M2 inside the hopper 122. The moistening unit 231 includes a steam vaporizer and, although not illustrated, has a water-dampened filter. By passing air through the filter, humidified air is produced and fed to the fragments M2. This reduces static charge on the fragments M2, ensuring the fragments M2 will not easily adhere, for example to the hopper 122.

The hopper 122 is coupled to the defibrating section 13 by a tube 241, which is a pathway for the transportation of the fragments M2. The fragments M2 collected at the hopper 122, therefore, are transported to the defibrating section 13 through the tube 241.

At the defibrating section 13, the defibrating step is performed. The defibrating section 13 defibrates the fragments M2 in a gas, for example in the air, or, in other words, dry-defibrates the fragments M2. Through the defibration at the defibrating section 13, defibrated fibers M3 are produced from the fragments M2. In this context, defibration refers to separating the fragments M2, each of which is an assembly of multiple fibers bound together, into individual fibers. The defibrated fibers M3, therefore, are individual fibers separated out of the fragments M2. The shape of the defibrated fibers M3 is flakes or strips. The defibrated fibers M3, furthermore, may include masses of fibers entangled together, or may have formed "lumps."

Between the defibrating section 13 and the screening section 14 are a blower 261 and a tube 242. The blower 261 is a device that produces a stream of gas. By rotating its rotor, not illustrated, the blower 261 produces a gas stream that sucks the fragments M2 from the hopper 122 into the defibrating section 13 via the tube 241. By the gas stream, furthermore, the defibrated fibers M3 are transported to the screening section 14 via the tube 242.

At the screening section 14, the screening step is performed. The screening section 14 screens the defibrated fibers M3 according to the length of fibers and/or the size of fiber masses. At the screening section 14, the defibrated fibers M3 are divided into first screened fibers M4-1 and second screened fibers M4-2, which are larger than the first screened fibers M4-1. The first screened fibers M4-1 have a size suitable for use as a material for the sheets S, which are the shaped article. The second screened fibers M4-2 include, for example, insufficiently defibrated fibers and too large aggregates of defibrated fibers.

The screening section 14 has a drum 141 and a housing 142. The housing 142 contains the drum 141. The defibrated fibers M3 flow into the drum 141.

The drum 141 is cylindrical, and the wall of the cylinder is mesh. The drum 141 rotates around its central axis. The meshed wall of the drum 141 functions as a sieve. As the drum 141 rotates, the defibrated fibers M3 in the drum 141 pass through the mesh as first screened fibers M4-1 when smaller than the mesh openings and remain inside the drum 141 to be second screened fibers M4-2 when larger than the mesh openings.

The first screened fibers M4-1 pass through the meshed wall of the drum 141. After that, the first screened fibers M4-1 fall down while dispersing in the air inside the housing 142. Below the drum 141 is a first web forming section 15.

A moistening unit 232 is coupled to the housing 142. The moistening unit 232 includes a steam vaporizer similar to that of the moistening unit 231. By the moistening unit 232, humidified air is fed into the housing 142. Static charge on the first screened fibers M4-1, therefore, is reduced, ensuring the first screened fibers M4-1 will not easily adhere, for example to the inner walls of the housing 142.

The second screened fibers M4-2 are transported to a tube 243 connecting to the inside of the drum 141. The tube 243 extends from the drum 141 and is coupled to the tube 241. The second screened fibers M4-2, therefore, are transported from the tube 243 to the tube 241 and mixed with the fragments M2 in the tube 241. That is, the second screened fibers M4-2 are defibrated again at the defibrating section 13.

At the first web forming section 15, the first web forming step is performed. The first web forming section 15 forms a first web M5 from the first screened fibers M4-1. The first web forming section 15 has a mesh belt 151, which is a separating belt; three tension rollers 152; and an aspirator 153.

The mesh belt 151 is an endless belt that is a piece of mesh. The mesh openings in the mesh belt 151 are smaller than the first screened fibers M4-1. The first screened fibers M4-1 that fall down from the drum 141, therefore, do not pass through the mesh openings in the mesh belt 151 but accumulate on the mesh belt 151.

The mesh belt 151 is wound around three tension rollers 152. As the tension rollers 152 are driven to rotate, the mesh belt 151 transports the deposit of first screened fibers M4-1 thereon downstream by rotating clockwise in FIG. 3. The screening step, at the screening section 14, and the rotation of the mesh belt 151 proceed in parallel and continuously. The first screened fibers M4-1 that accumulate on the mesh belt 151, therefore, are layered, forming a first web M5.

In this step, any dust, for example, in the first screened fibers M4-1 is eliminated as it passes through the mesh openings in the mesh belt 151 and falls down from the mesh belt 151. Such dust can enter the system together with the sheet-shaped material M1, for example when the sheet-shaped material M1 is fed from the material-feeding section 11 to the crushing section 12.

Below the housing 142 is an aspirator 153, facing the housing 142 with the mesh belt 151 therebetween. In side view, the aspirator 153 is inside the mesh belt 151 wound around the three tension rollers 152. The aspirator 153 pulls the air in the housing 142 above it through the portion of the mesh belt 151 facing the housing 142.

The air pulled by the aspirator 153 attracts the first screened fibers M4-1 to the upper surface of the mesh belt 151, accelerating the formation of the first web M5 on the mesh belt 151. The aforementioned dust, furthermore, is sucked through the mesh belt 151. The aspirator 153 is coupled to a trap 27 by a tube 244. The dust sucked into the aspirator 153 is collected in the trap 27.

A tube 245 and a blower 262 are also coupled to the trap 27. The blower 262 provides the suction at the aspirator 153. That is, the blower 262 causes the aspirator 153 to suck the air present above it by acting on it via the tube 245, the trap 27, and the tube 244.

Downstream of the screening section 14 is a moistening unit 235. The moistening unit 235 includes an ultrasonic humidifier and moistens the first web M5 by sending water mist to it. The water content of the first web M5, therefore, is adjusted. Static charge on the first web M5 is reduced, inhibiting electrostatic adhesion of the first web M5 to the mesh belt 151. This makes it easier to peel the first web M5 off the mesh belt 151 at the downstream end of the mesh belt 151.

Downstream of the moistening unit 235 is a shredding section 16. At the shredding section 16, the dividing step is performed. The shredding section 16 divides the first web M5 peeled off from the mesh belt 151. The shredding section 16 has a rotatably supported propeller 161 and a housing 162 that contains the propeller 161. A rotating propeller 161 touches the first web M5, dividing the first web M5. The first web M5 is divided into shreds M6. The shreds M6 fall down inside the housing 162.

A moistening unit 233 is coupled to the housing 162. The moistening unit 233 includes a steam vaporizer similar to that of the moistening unit 231. By the moistening unit 233, humidified air is fed into the housing 162. Static charge on the first shreds M6, therefore, is reduced, ensuring the shreds M6 will not easily adhere, for example to the inner walls of the housing 162 or the propeller 161.

Downstream of the shredding section 16 is a mixing section 17. At the mixing section 17, the mixing step is performed. The mixing section 17 mixes the shreds M6 and the complex C10 together. The mixing section 17 has a complex feeder 171, a tube 172, and a blower 173.

The tube 172 connects the bottom of the housing 162 and the housing 182 of the disintegrating section 18. The shreds M6 and a mixture M7 of the shreds M6 and the complex C10 pass through the tube 172.

The complex feeder 171 is coupled to the tube 172 between the housing 162 and the blower 173. The complex feeder 171 has a feeding screw 174. As the feeding screw 174 is driven to rotate, the complex C10 is fed from the complex feeder 171 into the tube 172. When the complex C10 is fed into the tube 172, the complex C10 and the shreds M6 are mixed together to give a mixture M7.

The complex C10 fed into the tube 172 may contain, for example, a colorant that colors the fibers, an aggregation inhibitor that reduces the aggregation of the fibers and that of the complex C10, and/or a flame retardant that renders the fibers fireproof.

The blower 173 is on the tube 172 and located downstream of where the complex feeder 171 is coupled to it. The blower 173 produces a stream of gas inside the tube 172, a gas stream that moves toward the disintegrating section 18. The gas stream transports the shreds M6 and the complex C10 inside the tube 172 to the disintegrating section 18 while stirring them. By virtue of the blower 173, unevenness in the distribution of the shreds M6 and the complex C10 in the mixture M7 is reduced.

The disintegrating section 18 is downstream of the tube 172. At the disintegrating section 18, the disintegrating step is performed. The disintegrating section 18 disintegrates masses of entangled fibers in the mixture M7 into smaller pieces. The disintegrating section 18 has a drum 181 and a housing 182 that contains the drum 181. The tube 172 connects to the inside of the drum 181, and the mixture M7 flows into the drum 181.

The drum 181 is cylindrical, and the wall of the cylinder is mesh. The drum 181 rotates around its central axis. The meshed wall of the drum 181 functions as a sieve. As the drum 181 rotates, the mixture M7 inside the drum 181 is disintegrated, and fibers smaller than the mesh openings pass through the mesh of the drum 181.

The part of the mixture M7 that has passed through the mesh of the drum 181 falls down below the drum 181 while dispersing in the air inside the housing 182. Below the drum 181 is a second web forming section 19.

A moistening unit 234 is coupled to the housing 182. The moistening unit 234 includes a steam vaporizer similar to that of the moistening unit 231. Humidified air is fed from the moistening unit 234 into the housing 182. Static charge on the mixture M7, therefore, is reduced, ensuring the mixture M7 will not easily adhere, for example to the inner walls of the housing 182.

At the second web forming section 19, the second web forming step is performed. The second web forming section 19 forms a second web M8 from the mixture M7. The second web forming section 19 has a mesh belt 191, which is a separating belt; four tension rollers 192; and an aspirator 193.

The mixture M7 falls down from the drum 181 onto the upper surface of the mesh belt 191. The mesh belt 191 is an endless belt that is a piece of mesh. The mesh openings in the mesh belt 191 are smaller than most of the fibers in the mixture M7 falling down from the drum 181. The mixture M7, therefore, does not pass through the mesh openings in the mesh belt 191 but accumulates on the upper surface of the mesh belt 191.

The mesh belt 191 is wound around four tension rollers 192. As the tension rollers 192 are driven to rotate, the mesh belt 191 transports the deposit of the mixture M7 thereon downstream by rotating clockwise in FIG. 3. The disintegrating step, at the disintegrating section 18, and the rotation of the mesh belt 191 proceed in parallel and continuously. The part of the mixture M7 that accumulates on the mesh belt 191, therefore, is layered, forming a second web M8.

Below the housing 182 is an aspirator 193, facing the housing 182 with the mesh belt 191 therebetween. In side view, the aspirator 193 is inside the mesh belt 191 wound around the four tension rollers 192. The aspirator 193 is coupled to a blower 263 by a tube 246.

The blower 263 provides the suction at the aspirator 193. That is, the blower 263 causes the aspirator 193 to suck the air present above it by acting on it via the tube 246. As a result of this, the aspirator 193 pulls the air inside the housing 182 above it through the portion of the mesh belt 191 facing the housing 182. The formation of the second web M8 on the mesh belt 191, therefore, is accelerated.

Downstream of where the housing 182 and the mesh belt 191 face each other is a moistening unit 236. Like the moistening unit 235, the moistening unit 236 includes an ultrasonic humidifier and moistens the second web M8 by sending water mist to it. The water content of the second web M8, therefore, is adjusted, and the strength of bonding between the fibers and the complex C10 in the resulting sheet S will be improved. Static charge on the second web M8, furthermore, is reduced, ensuring the second web M8 will not easily adhere to the mesh belt 191. This makes it easier to peel the second web M8 off the mesh belt 191 at the downstream end of the mesh belt 191.

Downstream of the second web forming section 19 is a sheet-forming section 20. At the sheet-forming section 20, the sheet-forming step is performed. The sheet-forming section 20 has a heat press 201. The second web M8 peeled off from the mesh belt 191 is transported to the sheet-forming section 20.

The heat press 201 has a pair of heating rollers 203. In the sheet-forming step, the pair of heating rollers 203 is used to shape the second web M8 into a sheet S.

The passage of the second web M8 between the pair of heating rollers 203 causes the second web M8 to be pressed while being heated. Each of the pair of heating rollers 203 has a built-in heater, not illustrated. The heater increases the surface temperature of the heating roller 203.

By the pair of heating rollers 203, heat and pressure are applied to the second web M8 in parallel. That is, at the pair of heating rollers 203, heating and pressing are performed simultaneously. More precisely, in the steps before the sheet-forming step, the second web M8 is not subjected to heating to a temperature higher than the temperature to which the pair of heating rollers 203 heats it. Likewise, in the steps before the sheet-forming step, the second web M8 is not subjected to the application of a pressure higher than the pressure the pair of heating rollers 203 applies to it.

This turns the second web M8 into a sheet S as a result of the starch in the complex C10 melting and joining the fibers together. The parallel pressing and heating of the second web M8 performed by the pair of heating rollers 203 encourages bonding between the fibers, improving the strength of the sheet S. The production process for the sheet S, furthermore, is streamlined. Because the pair of heating rollers 203 alone is used to perform heating and pressing, moreover, the setup is simple and can be easily made in a compact design compared with when heating and pressing are conducted using separate devices.

Preferably, the surface temperature of each heating roller 203 is 70°C or above and 140°C or below. This limits, for example, the degradation of the fibers in the second web M8. The starch, furthermore, gelatinizes, further encouraging bonding between the fibers.

As stated, it is preferred that the pressure applied by the pair of heating rollers 203 to the second web M8, formed from the mixture M7, be 0.2 MPa or more and 10.0 MPa or less, more preferably 0.2 MPa or more and 10.0 MPa or less, even more preferably 0.3 MPa or more and 5.0 MPa or less. This allows the starch to wet and spread better over the surface of the fibers, further encouraging bonding between the fibers.

One of the pair of heating rollers 203 is a driving roller powered by a motor, not illustrated, and the other is a driven roller. The second web M8 turns into a sheet S by passing through the heat press 201 in the sheet-forming section 20 and is transported to the downstream cutting section 21.

At the cutting section 21, the cutting step is performed. The cutting section 21 cuts the sheet S into the desired shape. The cutting section 21 has a first cutter 211 and a second cutter 212. In the cutting section 21, the first cutter 211 is closer to the sheet-forming section 20, and the second cutter 212 is downstream.

The first cutter 211 cuts the sheet S transversely with respect to the direction of transport of the sheet S. The second cutter 212 cuts the sheet S in the direction parallel to the direction of transport of the sheet S. By the first and second cutters 211 and 212, the sheet S is trimmed to its intended shape. Then the sheet S is stored in a stock section 22 placed downstream of the cutting section 21. In this way, a sheet S is produced.

Although sheets S have been featured as an example of a shaped article in this embodiment, this is not the only possible shape of the shaped article produced by the method according to an aspect of the present disclosure for producing a shaped article. Examples of shapes of the shaped article include various ones, such as blocks, spheres, and three-dimensional solids, besides sheets. Of these, the method according to an aspect of the present disclosure for producing a shaped article and the binder according to another are suitable for producing a sheet-shaped article by virtue of their ability to improve the strength of the shaped article.

When the shaped article is sheets S, it is preferred that the density of the sheets S is 0.6 g/cm³ or more and 0.9 g/cm³ or less. This makes, for example, the sheets S a suitable recording medium for inkjet recording. Besides recording media, furthermore, the sheets S may be used as a liquid absorbent, a buffering material, a sound absorber, etc., after treatment.

According to this embodiment, the following advantages are obtained.

In dry shaping, the strength of sheets S produced from fibers and a complex C10 is improved. More precisely, the gelatinization temperature of starch is stabilized by virtue of a limited alkali metal salt content of the starch, and this makes it easier to control the gelatinization temperature. The gelatinization temperature, therefore, is controlled, and bonding between the fibers in the mixture M7 through the gelatinization of the starch is encouraged. This improves the strength of the sheets S. Overall, this embodiment provides a method, for producing a shaped article, that improves the strength of sheets S in dry shaping and also provides the complex C10 as a binder.

### 3. Examples and Comparative Examples

The advantages of aspects of the present disclosure will now be more specifically described by providing examples and comparative examples. For Examples 1 to 14 and Comparative Examples 1 to 3, sheets S that were shaped articles were prepared and evaluated. Hereinafter, Examples 1 to 14 may be collectively referred to simply as the Examples, and Comparative Examples 1 to 3 may be collectively referred to simply as the Comparative Examples. It should be noted that no aspect of the present disclosure is limited by these Examples.

For each level of the Examples and Comparative Examples, the starch used and its specifications, the inorganic oxide particles C3 used, parameters in the production process for the shaped article, and the strength grade of the shaped article are presented in Tables 1 and 2. In Tables 1 and 2, the details of the starches and the inorganic oxide particles C3 are as follows. Starches
- 1 ... Product name, NSP-B1. Nippon Starch Chemical.
- 2 ... Product name, Lustergen^{®} FK. Nippon Starch Chemical. Inorganic Oxide Particles C3
- A ... Fumed silica; product name, REOLOSlL^{®} ZD-30ST (hydrophobic grade, surface-treated. The carbon content derived from the coating layer on the surface of the base particles is 2.9% by mass of the total mass of the inorganic oxide particles). Tokuyama.
- B ... Fumed silica; product name, REOLOSIL^{®} QS-30 (hydrophilic grade, not surface-treated). Tokuyama.

**Table 1**

| | Example 1 | Example 2 | Example 3 | Example 4 | Example 5 | Example 6 | Example 7 | Example 8 | Example 9 |
|---|---|---|---|---|---|---|---|---|---|
| Starch | 1 | 2 | 1 | 1 | 1 | 1 | 1 | 1 | 1 |
| Average particle diameter of the starch [µm] | 7.0 | 7.0 | 7.0 | 7.0 | 7.0 | 7.0 | 7.0 | 7.0 | 7.0 |
| Alkali metal salt content [% by mass] | 0.91 | 1.63 | 0.91 | 0.91 | 0.91 | 0.91 | 0.91 | 0.91 | 0.91 |
| Gelatinization temperature [°C] | 49 | 56 | 49 | 49 | 49 | 49 | 49 | 49 | 49 |
| Inorganic oxide particles | A | A | A | A | A | A | A | A | A |
| Amount of water supplied in the moistening step [% by mass] | 20 | 20 | 20 | 20 | 20 | 20 | 20 | 20 | 10 |
| Heating temperature in the shaping step [°C] | 90 | 90 | 55 | 62 | 195 | 220 | 90 | 90 | 90 |
| Pressure applied in the shaping step [MPa] | 2.0 | 2.0 | 2.0 | 2.0 | 2.0 | 2.0 | 0.1 | 20.0 | 2.0 |
| Strength grade of the shaped article | 5 | 5 | 4 | 5 | 5 | 4 | 3 | 2 | 3 |

**Table 2**

| | Example 10 | Example 11 | Example 12 | Example 13 | Example 14 | Comparative Example 1 | Comparative Example 2 | Comparative Example 3 |
|---|---|---|---|---|---|---|---|---|
| Starch | 1 | 1 | 1 | 1 | 1 | 1 | 1 | 1 |
| Average particle diameter of the starch [µm] | 7.0 | 0.8 | 40.0 | 7.0 | 7.0 | 7.0 | 7.0 | 7.0 |
| Alkali metal salt content [% by mass] | 0.91 | 0.91 | 0.91 | 0.91 | 0.91 | 2.45 | 3.18 | 2.21 |
| Gelatinization temperature [°C] | 49 | 49 | 49 | 49 | 49 | - | - | - |
| Inorganic oxide particles | A | A | A | None | B | A | A | A |
| Amount of water supplied in the moistening step [% by mass] | 50 | 20 | 20 | 20 | 20 | 20 | 20 | 20 |
| Heating temperature in the shaping step [°C] | 90 | 90 | 90 | 90 | 90 | 90 | 90 | 90 |
| Pressure applied in the shaping step [MPa] | 2.0 | 2.0 | 2.0 | 2.0 | 2.0 | 2.0 | 2.0 | 2.0 |
| Strength grade of the shaped article | 3 | 2 | 2 | 3 | 2 | 1 | 1 | 1 |

### 3.1. Preparation of Starches

Starches were prepared and analyzed/measured by the following methods. First, starches 1 and 2 were pretreated by crushing. Specifically, each of starches 1 and 2 was crushed using Hosokawa Micron's fluidized-bed opposed jet mill Counter Jet Mill AFG-R, giving binding material particles C2. For starch 1 or 2 in the Examples excluding Examples 11 and 12, the air pressure of the mill during crushing was set to 800 kPa. For starch 1 in Example 11, this air pressure was set to 1200 kPa, and for starch 1 in Example 12, this air pressure was set to 100 kPa.

To starch 1 in Comparative Example 1, a predetermined amount of FUJIFILM Wako Chemicals' sodium chloride was added as an alkali metal salt before the crushing. After that, the starch was crushed in the same way as the starches in the Examples. To starch 1 in Comparative Example 2, a predetermined amount of FUJIFILM Wako Chemicals' potassium chloride was added as an alkali metal salt before the crushing. After that, the starch was crushed in the same way as the starches in the Examples. To starch 1 in Comparative Example 3, a predetermined amount of FUJIFILM Wako Chemicals' sodium sulfate was added as an alkali metal salt before the crushing. After that, the starch was crushed in the same way as the starches in the Examples.

### 3.1.1. Average Particle Diameter of the Starch

For each of the crushed starches in the Examples and Comparative Examples, the average particle diameter of particles of the starch was measured by the method described above. The results are presented in Tables 1 and 2.

### 3.1.2. Qualitative and Quantitative Analyses of Alkali Metal Salts in the Binding Material

Using Rigaku's TG-DTA (thermogravimetry-differential thermal analysis) system TG8121, each starch was thermally decomposed at 850°C for 30 minutes in an atmosphere of inert gases including nitrogen and helium. Then the residue from thermal decomposition was qualitatively and quantitatively analyzed by energy dispersive x-ray spectroscopy (EDS). Alkali metal salts in the binding material were identified and quantified based on the mass of the starch before the TG-DTA measurement, the mass of the residue from thermal decomposition, and the EDS analytical results.

The results of the analysis indicated each of the starches in the Examples contained the alkali metal salt of sodium chloride. For the starch in Comparative Example 1, sodium chloride originally contained in starch 1 and sodium chloride added before crushing were detected.

For the starch in Comparative Example 2, sodium chloride originally contained in starch 1 and potassium chloride added before crushing were detected. The alkali metal salt content of the starch in Comparative Example 2 is the sum of the original sodium chloride content of starch 1 and the amount of potassium chloride added before crushing.

For the starch in Comparative Example 3, sodium chloride originally contained in starch 1 and sodium sulfate added before crushing were detected. The alkali metal salt content of the starch in Comparative Example 3 is the sum of the original sodium chloride content of starch 1 and the amount of sodium sulfate added before crushing. The alkali metal salt content of each starch is presented in Tables 1 and 2.

### 3.1.3. Measurement of the Gelatinization Temperature of the Starch

For each of the starches in the Examples and Comparative Examples, the gelatinization temperature was measured using Rigaku's differential scanning calorimeter Thermo plus EVO DSC8231. Specifically, a solution prepared by mixing the starch and deionized water together in a ratio by mass of 1 in 2 was sealed in a pressure-resistant aluminum pan, and this solution was used as a sample for measurement. Then this sample for measurement was set in the calorimeter and analyzed by differential scanning calorimetry at a heating rate of 2°C per minute. On each of the resulting DSC curves, the temperature at which the curve had the endothermic peak (temperature at the bottom of the peak) was read as the gelatinization temperature. The results are presented in Tables 1 and 2. It should be noted that in Comparative Examples 1, 2, and 3, the gelatinization temperature was indeterminable because the endothermic peak in the DSC curve was split.

### 3.2. Preparation of Complexes

A complex was prepared from each of the starches in the Examples excluding Example 13 and in the Comparative Examples. Specifically, the crushed starch and the inorganic oxide particles C3 were loaded into Nippon Coke & Engineering's Henschel mixer FM Mixer and mixed together at a frequency of 60 Hz for 10 minutes. Then coarse particles larger than 30 µm were eliminated using a 30-µm mesh sieve to complete the complex. In Example 13, the crushed starch alone, without inorganic oxide particles C3 added, was handled in the same way for a processing similar to the preparation of the complex. That is, Example 13 is a level at which no complex was formed.

### 3.3. Production of Shaped Articles

A shaped article was produced for each of the Examples and Comparative Examples. Specifically, the production system was a version of Seiko Epson's dry-process office papermaking system PaperLab A-8000 modified so that formed sheets could be moistened before processing. The sheet feeder of this system was loaded with used paper, as the aforementioned sheet-shaped material M1, prepared by printing a business document on FUJI XEROX's recycled copier paper GR-70W using an ink jet printer, and the system was configured for a grammage of 90 g/m².

Then cartridges of the system were each loaded with one of the complexes in Examples and the Comparative Examples or the processed starch in Example 13. The cartridges were attached to the system one after another, and recycled sheets were produced that were shaped articles in the Examples and Comparative Examples. Parameters in the moistening and shaping steps during production were set to the values indicated in Tables 1 and 2.

The shaped article in Example 1 is a level at which starch 1 and inorganic oxide particles A were used, the amount of water supplied in the moistening step was 20% by mass, the heating temperature in the shaping step was 90°C, and the pressure applied in the shaping step was 2.0 MPa.

Example 2, compared with Example 1, is a level at which starch 2 was used instead of starch 1.

Examples 3, 4, 5, and 6, compared with Example 1, is a level at which the heating temperature in the shaping step was changed.

Examples 7 and 8, compared with Example 1, is a level at which the pressure applied in the shaping step was changed.

Examples 9 and 10, compared with Example 1, is a level at which the amount of water supplied in the moistening step was changed.

Examples 11 and 12, compared with Example 1, is a level at which the average particle diameter was changed by adjusting the air pressure during the crushing.

Example 13, compared with Example 1, is a level at which no inorganic oxide particles were used; the starch did not form a complex.

Example 14, compared with Example 1, is a level at which inorganic oxide particles B were used instead of inorganic oxide particles A.

In Comparative Examples 1, 2, and 3, compared with Example 1, the alkali metal salt content of the starch was increased. Comparative Examples 1, 2, and 3 are levels at which the alkali metal salt content exceeded 2.0% by mass of the total mass of the starch.

### 3.4. Evaluation of the Strength of the Shaped Articles

As a measure of the strength of the shaped articles, specific tensile strength was measured. Specifically, the tensile tester was Shimadzu's Autograph AGS-1N. Immediately after the production of a shaped article, a test specimen was prepared by cutting a 100 mm×20 mm strip out of the shaped article. The test specimen was set on the tester, with the longitudinal axis of the test specimen aligned with the direction of stretch. Subsequently, the longitudinal fracture strength of the test specimen was measured at a tensile rate of 20 mm per second. The specific tensile strength was calculated from the measured fracture strength and the density of the shaped article and graded according to the following assessment criteria.
5: The specific tensile strength is 25 Nm/g or more.
4: The specific tensile strength is 20 Nm/g or more and less than 25 Nm/g.
3: The specific tensile strength is 15 Nm/g or more and less than 20 Nm/g.
2: The specific tensile strength is 10 Nm/g or more and less than 15 Nm/g.
1: The specific tensile strength is less than 10 Nm/g.

As shown in Tables 1 and 2, the specific tensile strength in all Examples was within acceptable limits, graded 2 or better. In particular, in Examples 1, 2, 4, and 5, the grade was 5, which corresponds to excellent, and in Examples 3 and 6, the grade was 4, which corresponds to good. This revealed the Examples improve the strength of shaped articles.

By contrast, as shown in Table 2, the specific tensile strength in all Comparative Examples was graded 1, which corresponds to poor. This revealed that by the Comparative Examples, it is difficult to improve the strength of shaped articles.

## Claims

1. A method for producing a shaped article, the method comprising:
a deposition step, in which a mixture containing fibers and a binding material is deposited in air, the binding material containing starch and an alkali metal salt;
a moistening step, in which the mixture is supplied with water; and
a shaping step, in which heat and pressure are applied to the mixture supplied with the water to give a shaped article (S), wherein:
an alkali metal salt content of the binding material is 2.0% by mass or less of a total mass of the starch;
in the moistening step, an amount of the water supplied to the mixture is 12% by mass or more and 40% by mass or less of a total mass of the mixture;
an average particle diameter of the binding material is 1.0 µm or more and 30.0 µm or less, wherein the average particle diameter of the binding material is measured as disclosed in the present description; and
particles of the binding material include inorganic oxide particles integrated therewith..

2. The method according to claim 1 for producing a shaped article, wherein a gelatinization temperature of the starch is 30°C or above and 60°C or below.

3. The method according to claim 1 for producing a shaped article, wherein the shaping step involves a pair of heating rollers.

4. The method according to claim 1 for producing a shaped article, wherein in the shaping step, the pressure applied to the mixture is 0.2 MPa or more and 10.0 MPa or less.

5. The method according to claim 1 for producing a shaped article, wherein:
the inorganic oxide particles have a coating layer on a surface thereof; and
the coating layer contains 2.0% by mass or more carbon in relation to a total mass of the inorganic oxide particles.

6. The method according to claim 1 for producing a shaped article, wherein the starch is an acid-treated starch, treated with an acid to have an adjusted average molecular weight.

## Patentansprüche

1. Verfahren zum Herstellen eines Formartikels, wobei das Verfahren umfasst:
einen Abscheidungsschritt, in dem ein Gemisch, das Fasern und ein Bindematerial enthält, in Luft abgeschieden wird, wobei das Bindematerial Stärke und ein Alkalimetallsalz enthält;
einen Befeuchtungsschritt, in dem dem Gemisch Wasser zugeführt wird; und
einen Formungsschritt, in dem Wärme und Druck auf das Gemisch aufgebracht werden, dem das Wasser zugeführt wurde, um einen Formartikel (S) zu erhalten, wobei:
ein Alkalimetallsalzgehalt des Bindematerials 2,0 Masseprozent oder weniger einer Gesamtmasse der Stärke ist;
in dem Befeuchtungsschritt eine Menge des dem Gemisch zugeführten Wassers 12 Masseprozent oder mehr und 40 Masseprozent oder weniger einer Gesamtmasse des Gemisches ist;
ein durchschnittlicher Teilchendurchmesser des Bindematerials 1,0 µm oder mehr und 30,0 µm oder weniger ist, wobei der durchschnittliche Teilchendurchmesser des Bindematerials wie in der vorliegenden Beschreibung offenbart gemessen wird; und Teilchen des Bindematerials damit integrierte anorganische Oxidteilchen beinhalten.

2. Verfahren nach Anspruch 1 zum Herstellen eines Formartikels, wobei eine Gelatinierungstemperatur der Stärke 30 °C oder höher und 60 °C oder niedriger ist.

3. Verfahren nach Anspruch 1 zum Herstellen eines Formartikels, wobei der Formungsschritt ein Paar Heizwalzen beinhaltet.

4. Verfahren nach Anspruch 1 zum Herstellen eines Formartikels, wobei in dem Formungsschritt der Druck, der auf das Gemisch aufgebracht wird, 0,2 MPa oder mehr und 10,0 MPa oder weniger ist.

5. Verfahren nach Anspruch 1 zum Herstellen eines Formartikels, wobei:
die anorganischen Oxidteilchen an ihrer Oberfläche eine Beschichtungsschicht aufweisen; und
die Beschichtungsschicht 2,0 Masseprozent oder mehr Kohlenstoff in Bezug auf eine Gesamtmasse der anorganischen Oxidteilchen enthält.

6. Verfahren nach Anspruch 1 zum Herstellen eines Formartikels, wobei die Stärke eine säurebehandelte Stärke ist, die mit einer Säure behandelt ist, um ein eingestelltes durchschnittliches Molekulargewicht aufzuweisen.

## Revendications

1. Procédé de production d'un article façonné, le procédé comprenant :
une étape de dépôt, dans laquelle un mélange contenant des fibres et un matériau de liaison est déposé dans l'air, le matériau de liaison contenant de l'amidon et un sel métallique alcalin ;
une étape d'humidification, dans laquelle le mélange est alimenté en eau ; et
une étape de façonnage, dans laquelle de la chaleur et une pression sont appliquées au mélange alimenté en eau pour fournir un article façonné (S), dans lequel :
une teneur de sel métallique alcalin du matériau de liaison représente 2,0 % en masse ou moins d'une masse totale de l'amidon ;
dans l'étape d'humidification, une quantité de l'eau fournie au mélange représente 12 % en masse ou plus et 40 % en masse ou moins d'une masse totale du mélange ;
un diamètre de particule moyen du matériau de liaison mesure 1,0 µm ou plus et 30,0 µm ou moins, dans lequel le diamètre de particule moyen du matériau de liaison est mesuré de la façon décrite dans la présente description ; et
des particules du matériau de liaison incluent des particules d'oxyde inorganique intégrées à celles-ci.

2. Procédé selon la revendication 1 pour la production d'un article façonné, dans lequel une température de gélatinisation de l'amidon s'élève à 30 °C ou plus et à 60 °C ou moins.

3. Procédé selon la revendication 1 pour la production d'un article façonné, dans lequel l'étape de façonnage implique une paire de rouleaux chauffants.

4. Procédé selon la revendication 1 pour la production d'un article façonné, dans lequel, dans l'étape de façonnage, le pression appliquée au mélange s'élève à 0,2 MPa ou plus et à 10,0 MPa ou moins.

5. Procédé selon la revendication 1 pour la production d'un article façonné, dans lequel :
les particules d'oxyde inorganique comportent une couche de revêtement sur une surface de celles-ci ; et
la couche de revêtement contient 2,0 % en masse ou plus de carbone par rapport à une masse totale des particules d'oxyde inorganique.

6. Procédé selon la revendication 1 pour la production d'un article façonné, dans lequel l'amidon est un amidon traité à l'acide, traité avec un acide pour l'obtention d'un poids moléculaire moyen ajusté.
